# EUROPÄISCHE PATENTSCHRIFT

(11) **EP 3 022 160 B1**
(45) Veröffentlichungstag und Bekanntmachung des Hinweises auf die Patenterteilung: **04.12.2019**
(21) Anmeldenummer: 14733575.6
(22) Anmeldetag: 16.06.2014
(51) Int. Cl.: C03B 23/049, C03B 23/11, A61J 1/06, B65D 1/09, C03B 21/06, C03B 23/09

(54) **VERFAHREN ZUM HERSTELLEN VON GLASFLÄSCHCHEN**
METHOD FOR PRODUCING GLASS VIALS
PROCÉDÉ DE PRODUCTION DE FLACONS EN VERRE

(30) Priorität: 17.07.2013 DE 102013107607
(43) Veröffentlichungstag der Anmeldung: 25.05.2016
(73) Patentinhaber: Schott AG, 55122 Mainz (DE)
(72) Erfinder: MAENNL, Reinhard, 95666 Mitterteich (DE); TRATZKY, Stephan, 92660 Neustadt an der Waldnaab (DE); JAEGER, Franz, 95643 Tirschenreuth (DE)
(74) Vertreter: Herzog IP Patentanwalts GmbH
(86) Internationale Anmeldenummer: PCT/EP2014/062550
(87) Internationale Veröffentlichungsnummer: WO 2015/007445

(56) Entgegenhaltungen:
- EP-A2- 2 239 237
- JP-A- 2010 274 091
- US-A- 2 087 947
- US-A- 2 835 079
- US-A- 4 869 744
- DATABASE WPI Week 198610 15. August 1985 (1985-08-15) Thomson Scientific, London, GB; AN 1986-067262 XP002729263, -& SU 1 172 892 A1 (LENGD PROGRESS) 15. August 1985 (1985-08-15)
- DATABASE WPI Week 201082 3. November 2010 (2010-11-03) Thomson Scientific, London, GB; AN 2010-P98048 XP002729264, -& CN 101 874 760 A (NIPRO CORP) 3. November 2010 (2010-11-03)
- Nipro Corporation: "IN304080 - Method for producing medical glass container", , 4 May 2012 (2012-05-04), XP055555724, Retrieved from the Internet: URL:http://ipindiaservices.gov.in/PublicSe arch/ [retrieved on 2019-02-12]

## Beschreibung

Die Erfindung betrifft ein Verfahren zum Herstellen von Glasfläschchen, insbesondere von Pharmafläschchen und Pharmaampullen.

Glasfläschchen, die für Pharmazwecke benutzt werden (auch als so genannte "Vials" bekannt) bestehen aus Neutralgläsern, das heißt Gläsern, die der hydrolytischen Klasse 1 zugeordnet werden können, wozu auch der normierte Test ISO 719 (DIN 12111) dient. Zu den Neutralgläsern gehören insbesondere Borosilikatgläser, wie etwa DURAN® oder Fiolax® (beides eingetragene Marken der SCHOTT AG, Mainz).

Pharmafläschchen bzw. Pharmaampullen müssen darüber hinaus auch eine möglichst geringe Alkaliabgabe aufweisen, wobei die Messung nach dem normierten Test ISO 4802 erfolgt. Außerdem müssen sog. Delamininationen vermieden werden, d.h. Abplatzungen von Bereichen an der Glasoberfläche, die insbesondere durch während der Heißformgebung verflüchtigte und auf der Glasoberfläche abgelagerte Glasbestandteile entstanden sind. Im schlimmsten Fall würden nämlich solche Delaminationen in den Inhalt der Pharmafläschchen gelangen und den Inhalt somit unbrauchbar machen.

In herkömmlicher Weise werden Pharmafläschchen in der Regel aus Borosilikatglas durch Heißformung aus einem Borosilikatglasrohr hergestellt. Dabei wird zuerst aus dem offenen Rohrende die Mündung des Fläschchens geformt. Anschließend wird der Fläschchenboden geformt und gleichzeitig das Fläschchen vom Rest des Glasrohres abgetrennt.

Die Herstellung von Pharmafläschchen erfolgt in mehreren Schritten. Üblicherweise wird in einem ersten Schritt ein Glasrohr in einem oberen und einem unteren Spannfutter fixiert und dann in Rotation versetzt. Das drehende Glasrohr wird in einem bestimmten Bereich von einem oder zwei Trennbrennern so weit erwärmt, dass es verformbar wird. Sobald diese Temperatur erreicht ist, wird das Rohr - unter fortwährender Drehung und Erwärmung durch den Brenner - mittels einer Linearbewegung des unteren Spannfutters in Axialrichtung nach unten auseinandergezogen. Dadurch dehnt sich das Rohr im Aufwärmbereich unter gleichzeitiger Verjüngung seines Durchmessers, so dass ein Einschnürbereich entsteht. Nach der Abwärtsbewegung wird der Einschnürbereich weiter aufgeheizt. Dabei zieht sich das Glasrohr am Einschnürbereich durch den Strömungsdruck der Brennergase weiter zusammen, so dass die Glaswandung im Erwärmungsbereich zusammenschmilzt und schließlich die Verbindung zwischen dem oberen und unteren Rohrabschnitt abreißt.

Es entstehen so zwei Rohrabschnitte mit verschlossenem Ende, wobei der untere Rohrabschnitt das fertige Fläschchen und der obere Rohrabschnitt das restliche Glasrohr darstellt, aus dem weitere Fläschchen geformt werden können. In einem nachfolgenden Schritt wird unter dem oberen Rohrabschnitt ein so genannter "Aufstechbrenner" platziert, um den Boden des oberen Rohrabschnitts wieder aufzuschmelzen. Auch während dieses Vorgangs wird der obere Rohrabschnitt gedreht.

Dies ist grundsätzlich aus der US-A-2 935 819 bekannt.

Aus der EP-A-2 239 237 ist dieses Herstellverfahren gleichfalls bekannt. Danach wird zunächst die Öffnung des Fläschchens geformt und dann der Boden. Bei der Bodenformung muss das Glasrohr auf eine höhere Temperatur aufgeheizt werden, und somit können sich Alkaliboratkomponenten aus dem Glasrohr verflüchtigen und sich auf der Innenoberfläche des Fläschchens absetzen. Es ergibt sich somit ein veränderter Bereich an der Innenoberfläche des Glasfläschchens, aus dem Alkalikomponenten leicht ausgelaugt werden können und der auch zu Delaminationen neigt.

Zur Reduzierung der Alkaliauslaugung sind Behandlungen mit Natriumsulfat oder auch eine CVD-Beschichtung der Innenoberfläche mit einer dünnen Quarz-Schicht bekannt.

Gemäß der US-A1-2009/0099000 wird versucht, die Alkalifreisetzung durch eine Umkehrung der Fertigungsschritte bei der Fläschchenherstellung zu reduzieren. Danach soll zunächst der Boden geformt werden, erst dann erfolgt eine Formung des Flaschenhalses. Eine weitere Senkung der Alkaliabgabe soll durch ein zusätzliches Behandeln der Innenoberfläche mittels einer Flamme während des Bodenformens erreicht werden.

Gemäß der EP-A-2 239 237 wird zur Verringerung der Alkaliauslaugung vorgeschlagen, die Innenoberfläche des Glasfläschchens mit einer Brennerflamme zu behandeln, um daran haftende Alkalikomponenten und dergleichen zu entfernen.

Dadurch soll die Alkaliauslaugung reduziert werden.

SU1172892 A1 offenbart ein Verfahren zur Herstellung von Glasfläschchen durch lokales Aufheizen des Glasrohres mit Brennern, Durchmesserreduzierung durch seitliches Andrücken eines Formteils und Trennen des Glasrohres mit einem Brenner.

JP2010274091 A und IN304080 offenbaren ein Verfahren zur Herstellung von Glasampullen, bei dem ebenfalls durch seitliches Andrücken eines Formteils der Durchmesser eines Glasrohres reduziert wird. Die Trennung des Rohres erfolg anschließend in einem in seinem Durchmesser zuvor nicht reduzierten Bereich.

US4869744 offenbart ein Verfahren zur Herstellung eines langgestreckten röhrenförmigen Lampengefäßes mit einem Kragen an jedem Ende, wobei das Verfahren Verfahrensschritte umfasst, in denen in einem Glasrohr eine Einschnürung in erhitzten Abschnitten des Glasrohres gebildet und die Endabschnitte der Röhre zwischen den Röhrenenden und der Einschnürung abgetrennt werden.

Die bekannten Herstellverfahren sind einerseits relativ aufwändig oder führen andererseits zu Lösungen, bei denen die Alkaliabgabe noch als zu hoch angesehen wird.

Vor diesem Hintergrund liegt der Erfindung die Aufgabe zugrunde, ein Verfahren zum Herstellen von Glasfläschchen zu schaffen, das insbesondere für die Herstellung von Pharmafläschchen geeignet ist und das zu einer reduzierten Alkalifreisetzung führt. Ferner soll ein entsprechend verbessertes Glasfläschchen geschaffen werden.

Diese Aufgabe wird durch ein Verfahren zum Herstellen von Glasfläschchen, wie in Anspruch 1 definiert, gelöst.

Die Aufgabe der Erfindung wird auf diese Weise vollkommen gelöst.

Erfindungsgemäß wird durch den zusätzlichen Schritt (c), das heißt durch eine Durchmesserreduzierung durch Andrücken mindestens eines Formteils auf den erweichten Bereich, erreicht, dass der erweichte Bereich in seinem Durchmesser deutlich weiter verkleinert wird, bevor im nachfolgenden Trennschritt (d) die Durchtrennung mittels eines Brenners erfolgt.

Dies hat zur Folge, dass die Durchtrennung deutlich schneller erfolgen kann und/oder dass die Temperatur im zu trennenden Bereich deutlich niedriger liegen kann als beim herkömmlichen Verfahren. Wegen der verkürzten Trennzeit bzw. der niedrigeren Temperatur entstehen deutlich weniger Alkaliboratdämpfe. Auch rekondensiert eine geringere Menge in kälteren Bereichen der Fläschcheninnenoberfläche. Auf diese Weise wird die Alkaliabgabe der Fläschchen beim Test nach ISO 4802 deutlich reduziert. Gleichzeitig wird die Delaminationsneigung deutlich reduziert.

In weiterer Ausführung der Erfindung wird nach dem Erhitzen des Glasrohrs im Schritt (b) zusätzlich ein weiterer Schritt (b1) ausgeführt, bei dem ein Auseinanderziehen des rotierenden Glasrohrs in Axialrichtung zur Erzeugung eines Einschnürbereiches (16) erfolgt.

In bevorzugter Ausführung der Erfindung werden die Schritte (a) bis (d) und ggf. (b1) bei rotierendem Glasrohr in der angegebenen Reihenfolge durchgeführt.

Nach dem Trennschritt (d) verbleibt neben den geformten Fläschchen das Glasrohr mit einem geschlossenen Ende. Dieses wird zweckmäßigerweise in einem anschließenden Schritt mittels eines Brenners (Aufstechbrenner) wieder aufgestochen, so dass anschließend die Formung des nächsten Glasfläschchens erfolgen kann.

In zweckmäßiger Weiterbildung der Erfindung wird das rotierende Glasrohr nach dem Schritt (a) zunächst an einem Ende erhitzt und geformt, um einen Halsbereich des zu formenden Fläschchens zu bilden, bevor anschließend in einem vorbestimmten Abstand vom Ende das lokale Aufheizen mittels eines Brenners erfolgt.

Das Glasrohr wird bevorzugt mit einer Drehzahl von 200 min⁻¹ bis 500 min⁻¹ angetrieben, vorzugsweise mit 250 min⁻¹ bis 450 min⁻¹, weiter bevorzugt mit 300 min⁻¹ bis 400 min⁻¹.

Es hat sich gezeigt, dass mit einer derartigen Drehzahl die einzelnen Verfahrensschritte des lokalen Aufheizens, der Durchmesserreduzierung, des Trennens und ggf. des Auseinanderziehens des Glasrohrs in besonders vorteilhafter Weise durchgeführt werden können.

Vorzugsweise wird ein Glasrohr aus einem Neutralglas in Form eines Borosilikatglas zur Herstellung der Glasfläschchen verwendet.

Gemäß einer weiteren Ausgestaltung der Erfindung besteht der Formkörper aus einer Wolframlegierung, aus Elektrographit oder aus warmfestem Stahl.

Insbesondere bei Herstellung des Formkörpers aus einer Wolframlegierung oder aus Elektrographit ergibt sich ein besonders günstiges Benetzungsverhalten zur Glasoberfläche, was eine Durchmesserverringerung unterstützt.

Gemäß einer weiteren Ausgestaltung der Erfindung wird der Formkörper rotierend angetrieben.

Durch einen rotierenden Antrieb kann die Durchmesserreduzierung im erhitzten Bereich noch weiter verbessert werden.

Gemäß einer weiteren Ausgestaltung der Erfindung wird der Formkörper zusätzlich beheizt.

Durch eine Beheizung des Formkörpers wird die Durchmesserreduzierung weiter unterstützt.

Vorzugsweise ist der Formkörper in Richtung zum Glasrohr hin verjüngt ausgebildet, vorzugsweise spitz zulaufend ausgebildet.

Auch hierdurch wird die Durchmesserreduzierung weiter verbessert.

Gemäß einer weiteren Ausgestaltung der Erfindung ist es bevorzugt, von beiden Seiten des Glasrohres her jeweils einen Formkörper zuzustellen.

Insgesamt wird durch diese Maßnahmen die Durchmesserreduzierung im erhitzten Bereich deutlich verbessert.

Durch die verbesserte Durchmesserreduzierung wird der Trennvorgang vereinfacht, so dass weniger Alkaliboratabdampfverluste auftreten.

Dadurch wird die Zeit deutlich reduziert, während derer das Glasrohr der Flamme des Trennbrenners ausgesetzt ist, so dass die Natriumboratabdampfung deutlich reduziert wird.

Gleichzeitig kann die Temperatur des Trennbrenners gegenüber herkömmlichen Verfahren reduziert werden.

Offenbart wird ferner ein Glasfläschchen, insbesondere ein Pharmafläschchen, mit einem geschlossenen Boden und einem offenen Flaschenhals gelöst, das vorzugsweise aus einem Neutralglas, insbesondere aus einem Borosilikatglas, besteht, bei dem der Alkaligehalt im oberflächennahen, heißverformten Bereich höchstens um 30 %, bevorzugt höchstens um 20 %, weiter bevorzugt höchstens um 10 % gegenüber dem Alkaligehalt im Glasinneren reduziert ist.

Des Weiteren offenbart wird ein derartiges Glasfläschchen, insbesondere Pharmafläschchen, bei dem die Natrium-Abgabe gemäß ISO 4802-2 kleiner ist als 0,5 µg/cm², vorzugsweise kleiner als 0,25 µg/cm².

Die erfindungsgemäß hergestellten Pharmafläschchen zeichnen sich durch eine deutlich geringere Alkaliabgabe als herkömmliche Glasfläschchen aus und weisen eine deutlich geringere Delaminationsneigung als auch gleichmäßigere Alkaliverteilung als herkömmliche Glasfläschchen auf.

Insgesamt weisen die erfindungsgemäßen Glasfläschchen somit deutlich verbesserte Eigenschaften zur Verwendung als Pharmafläschchen auf.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine schematische Darstellung der Herstellungsschritte zur Heißformung von Pharmafläschchen gemäß dem Stand der Technik;
- Fig. 2: eine schematische Darstellung der Herstellungsschritte bei der Formung von Pharmafläschchen gemäß der Erfindung;
- Fig. 3: einen Vergleich der Natriumabgabe gemäß dem Testverfahren ISO 4802-2 für zwei Borosilikatglastypen (Typ 1 und Typ 2), wobei die Testergebnisse an herkömmlich hergestellten Borosilikatgläsern des Typs 1 mit A1 und des Typs 2 mit B1 bezeichnet sind und den Testergebnissen an den erfindungsgemäß hergestellten Glasfläschchen unter sonst gleichen Bedingungen und Größen gegenübergestellt sind und
- Fig. 4: eine vergrößerte Darstellung eines Glasröhrchens in der Phase der Durchmesserreduzierung mittels zweier rotierend angetriebener Formkörper.

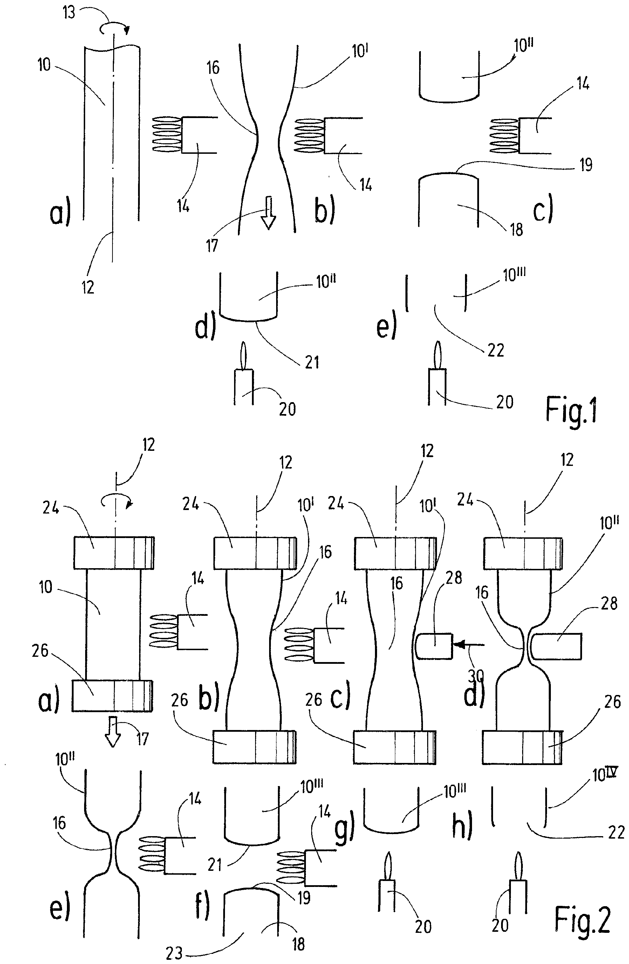

Anhand von Fig. 1 sei zunächst die Heißformgebung von Pharmafläschchen gemäß dem Stand der Technik (vgl. zum Beispiel US-A-2 935 819 oder EP-A2-2 239 237) erläutert.

Ein Glasrohr 10, das etwa aus einem Borosilikatglas, wie zum Beispiel Fiolax® (eingetragene Marke der SCHOTT AG, Mainz) besteht, wird zwischen zwei Spannfuttern angespannt und um seine Längsachse 12 rotierend angetrieben, wie durch einen Pfeil 13 angedeutet ist.

Nunmehr wird durch einen seitlich angeordneten Brenner 14, der unmittelbar auf die Manteloberfläche des Glasrohrs 10 gerichtet ist, das Glasrohr 10 in Fig. 1a) so lange erhitzt, bis es erweicht und verformbar wird. Sobald diese Temperatur erreicht ist, wird das Glasrohr 10 unter fortwährender Drehung und Erwärmung durch den Brenner 14 mittels einer Linearbewegung des unteren Spannfutters in Axialrichtung auseinandergezogen, wie durch den Pfeil 17 in Fig. 1b) angedeutet ist. Dadurch dehnt sich das Glasrohr im Aufwärmbereich unter gleichzeitiger Verjüngung seines Durchmessers, und es ergibt sich ein Einschnürbereich 16 mit einem verringerten Durchmesser. Nach der Abwärtsbewegung wird der Einschnürbereich 16 weiter aufgeheizt. Dabei zieht sich das Glasrohr 10' an der Verjüngungsstelle durch den Strömungsdruck der Brennergase weiter zusammen, so dass die Glaswandung, wie in Fig. 1c) dargestellt, im Erwärmungsbereich zusammenschmilzt und schließlich die Verbindung zwischen oberem und unterem Rohrabschnitt abreißt. Es entstehen so zwei Rohrabschnitte mit verschlossenem Ende, wobei der untere Rohrabschnitt das fertige Fläschchen 18 mit dem Boden 19 und der obere Rohrabschnitt das restliche Glasrohr 10" darstellt, aus dem die nächsten Fläschchen geformt werden. In einem nachfolgenden Schritt wird unter dem oberen Rohrabschnitt 10" ein so genannter "Aufstechbrenner" 20 platziert, um das geschlossene Ende 21 des oberen Rohrabschnitts 10" wieder aufzuschmelzen, was in Fig. 1b) gezeigt ist.

Untersuchungen der Erfinder haben ergeben, dass insbesondere die Erhitzung durch den Brenner 14, durch die schließlich die Auftrennung des Glasrohrs 16 im Einschnürbereich 16 in zwei geschlossene Teile erfolgt, für ein starkes Abdampfen von Alkaliboraten aus der Glasmatrix verantwortlich ist.

Gemäß dem erfindungsgemäßen Verfahren wird die Alkaliboratabdampfung deutlich reduziert, da die notwendige Temperatur beim Trennen des Glasrohrs deutlich reduziert wird.

Dies wird im Folgenden anhand von Fig. 2 näher beschrieben.

Hierbei werden für entsprechende Teile entsprechende Bezugsziffern verwendet.

Im ersten Schritt gemäß Fig. 2a) wird ein Glasrohr 10, das etwa aus einem Borosilikatglas, wie etwa Fiolax® (eingetragene Marke der SCHOTT AG, Mainz) bestehen kann, zwischen einem oberen Spannfutter 24 und einem unteren Spannfutter 26 vertikal eingespannt. Das Glasrohr 10 wird dann um seine Längsachse 12 rotierend angetrieben, wozu beispielsweise eine Drehzahl von etwa 300 bis 400 U/min verwendet werden kann. Anschließend wird das rotierende Glasrohr 10 von einem oder zwei Trennbrennern 14 unter fortwährender Drehung erwärmt, indem die Brennerflamme unmittelbar radial auf das Glasrohr 10 gerichtet wird, wodurch ein Bereich von ca. 2 cm erwärmt wird. Sobald das Glasrohr 10 so weit erweicht ist, dass es verformbar wird, wird es durch Bewegen des unteren Spannfutters 26 in Axialrichtung nach unten, wie durch den Pfeil 17 angedeutet, auseinandergezogen. Dadurch dehnt sich das Glasrohr 10 im Aufwärmbereich unter gleichzeitiger Verjüngung seines Durchmessers, so dass der Einschnürbereich 16 entsteht. Nunmehr wird der Brenner 14 seitlich weggeschwenkt und bei weiterer Drehung des Rohres ein Formteil 28 radial möglichst weit in das Glasrohr 10 hineingedrückt, so dass nur noch eine möglichst schmale Glasverbindung zwischen dem oberen und dem unteren Rohrabschnitt verbleibt, wie in Fig. 2c) und 2d) dargestellt ist.

Auf den Schritt des Auseinanderziehens in Axialrichtung zur Erzeugung eines Einschnürbereiches 16 kann auch verzichtet werden. Stattdessen kann unmittelbar eine Verformung des mindestens bis auf Erweichungstemperatur E_{W} erwärmten Glasrohrs 10 durch Eindrücken des Formteils 28 erfolgen.

Das hierbei verwendete Formteil 28 besteht bevorzugt aus einer Wolframlegierung oder aus Elektrographit und ist an seiner dem Glasrohr 10 zugewandten Oberfläche abgerundet oder zugespitzt

Anschließend wird das Formteil 28 wieder weggeschwenkt und der Brenner 14 vor den verbleibenden Einschnürbereich 16 des Glasrohrs 10" zurückgeschwenkt, um den verbleibenden, schmalen Glasstrang abzuschmelzen.

Es entstehen dann gemäß Fig. 2f) wiederum zwei Teile mit geschlossenem Boden, wobei das untere Teil das fertig hergestellte Glasfläschchen 18 mit dem Boden 19 ist und das obere Teil das im oberen Spannfutter 24 gehaltene Glasrohr 10'" mit geschlossenem Ende 21 ist. In den nachfolgenden Schritten wird gemäß Fig. 2g) und 2h) das geschlossene Ende des Glasrohrs 10"' wiederum mittels des Aufstechbrenners 20 aufgeschmolzen, um gemäß Fig. 2h) am unteren Ende des Glasrohrs 10"" eine Öffnung 22 zu erhalten.

Die gegenüber dem Stand der Technik im Wesentlichen dadurch veränderte Verfahrensführung, dass nach einem anfänglichen Erwärmen und ggf. Auseinanderziehen des Glasrohrs der erhitzte Bereich 16 durch radiales Eindrücken eines Formteils 28 stark verjüngt wird, so dass nur noch ein schmaler Reststrang verbleibt, führt dazu, dass bei niedrigerer Temperatur während des Abtrennvorgangs gearbeitet werden kann bzw. dazu, dass der Abtrennvorgang verkürzt wird. Dies hat wiederum zur Folge, dass deutlich weniger Alkaliverluste auftreten und schließlich auch die Testergebnisse beim Auslaugtest gemäß ISO 4802 deutlich verbessert sind. Wird auf den Schritt des Auseinanderziehens sogar verzichtet, so reicht die Erweichungstemperatur oder eine geringfügig darüber liegende Temperatur aus, um die notwendige Durchmesserverringerung zu erzielen.

Es versteht sich natürlich, dass zunächst ein etwaiger Halsbereich mittels einer Brennerflamme und ggf. einem Formteil am unteren Ende eines Glasrohrs geformt werden kann, wie im Stand der Technik grundsätzlich bekannt, bevor mit der Durchmesserverringerung und dem nachfolgenden Trennvorgang begonnen wird. Da dies nicht zum Kern der Erfindung gehört, wurde dies hier nicht näher beschrieben.

Zum Vergleich wurden an einer Einstationen-Rohrbearbeitungsanlage mit Glasrohren des Glastyps 1 bzw. 2 (beides Borosilikatgläser der Schott AG, Mainz) mit einem Außendurchmesser von 16 mm bei einer Wandstärke von 1 mm Behälter nach der herkömmlichen Formgebungsmethode gemäß Fig. 1 und nach der neuen erfindungsgemäßen Bodenformgebungsmethode gemäß Fig. 2 hergestellt.

Der Glastyp 2 ist das von der Schott AG unter der Marke Fiolax® vertriebene Borosilikatglas, das die folgende Hauptbestandteile (im Gew.-% auf Oxidbasis) aufweist:

| | |
|---|---|
| SiO₂ | 75 |
| B₂O₃ | 10,5 |
| Al₂O₃ | 5 |
| Na₂O | 7 |
| BaO | <<1 |
| CaO | 1,5. |

Die Erweichungstemperatur E_{W} liegt bei nur 785 °C, während die Verarbeitungstemperatur V_{A} bei 1165 °C liegt. Bei der herkömmlichen Verarbeitung musste das Glasrohr zwecks Auseinanderziehen zur Erzeugung einer Einschnürung bis auf die Verarbeitungstemperatur erwärmt werden.

Die Gesamtverarbeitungszeit vom Beginn des Aufheizens des Glasrohres bis zur Ausbildung der Glasböden an beiden Rohrenden war bei beiden Herstellverfahren identisch.

Beide Behälter, die nach den herkömmlichen Verfahren und nach dem erfindungsgemäßen Verfahren hergestellt waren, wurden auf ihre Natriumfreisetzung an der Behälterinnenoberfläche gemäß dem Testverfahren ISO 4802-2 analysiert.

Das Testverfahren ergibt sich aus der Norm ISO 4802-2 und ist in "Special Glass Containers for Primary Packaging: Alkali Release Measurement", Pharma Information Letter, 8th Edition, 06/2004, Seiten 1 bis 6 näher beschrieben.

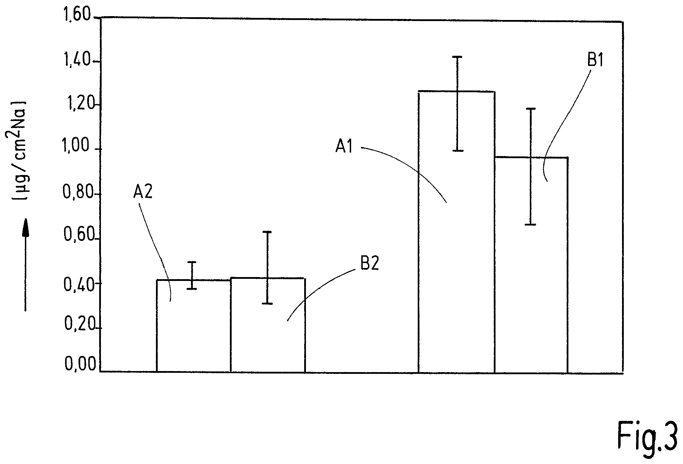

Die sich ergebende Natriumfreisetzung in µm/cm² ist in Fig. 3 zusammengefasst. Der Balken A1 zeigt die Natriumfreisetzung an den Proben aus dem Borosilikatglas Typ 1 (Fiolax®) und B1 an den Proben aus dem Borosilikatglas Typ 2, beide hergestellt nach dem herkömmlichen Verfahren.

A2 und B2 zeigen die entsprechende Natriumfreisetzung an den nach dem erfindungsgemäßen Verfahren hergestellten Glasproben.

Es zeigt sich eine deutliche Verminderung der Natriumfreisetzung bei den nach dem erfindungsgemäßen Verfahren hergestellten Glasfläschchen.

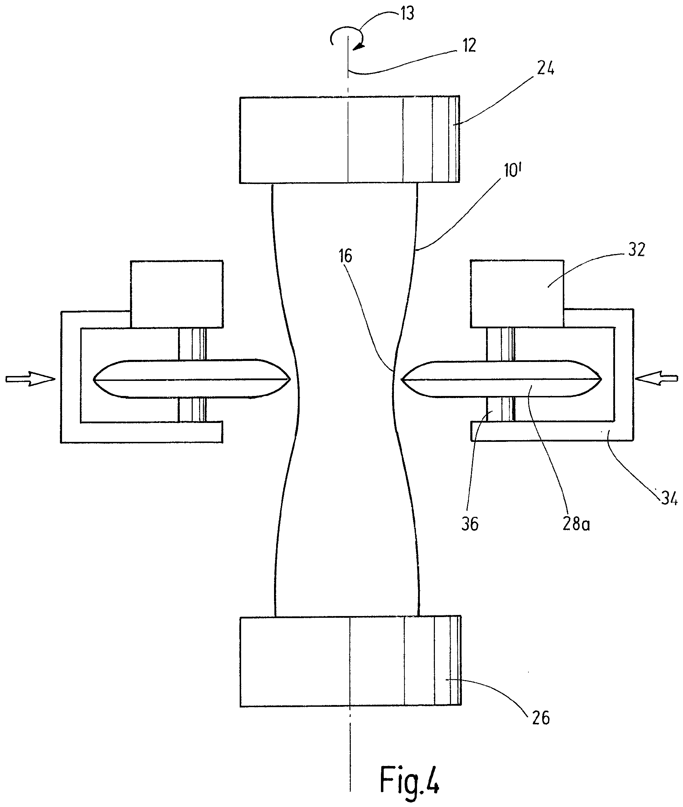

In Fig. 4 ist eine weitere Variante des erfindungsgemäßen Verfahrens dargestellt.

Hierbei werden entsprechende Teile mit entsprechenden Bezugsziffern bezeichnet.

In diesem Fall wird der Einschnürbereich 16 des rotierenden Glasrohrs 10' nicht nur mit einem einzigen Formkörper, wie zuvor beschrieben, sondern von beiden Seiten her mit je einem Formkörper 28a beaufschlagt.

Zusätzlich sind die Formkörper 28a noch rotierend angetrieben. Sie können, wie beispielhaft dargestellt ist, an einem beweglichen Rahmen 34 mittels einer Welle 36 gelagert sein und über einen Antrieb 32 angetrieben werden, der zusätzlich noch mit einer Heizeinrichtung gekoppelt sein kann, um die Formkörper 28a zusätzlich zu beheizen.

Vorzugsweise bestehen die Formkörper 28 bzw. 28a aus einer Wolframlegierung, reinem Wolfram oder Elektrographit. Dies ergibt ein besonders günstiges Benetzungsverhalten gegenüber der Glasoberfläche. Grundsätzlich ist auch eine Herstellung aus warmfestem Stahl denkbar, jedoch ist das Benetzungsverhalten bei Wolfram bzw. Graphit günstiger. Vorzugsweise verjüngt sich der Formkörper 28 bzw. 28a in Richtung zum Glasrohr hin, insbesondere kann eine spitz zulaufende Form verwendet werden. Im Falle von rotierend angetriebenen Formkörpern 28a gemäß Fig. 4 ergibt sich somit eine etwa scheibenförmige Form, die an den Randseiten spitz zuläuft.

Es ist davon auszugehen, dass mit einer derartigen Ausführung gemäß Fig. 4 noch eine weitere Reduktion der Alkaliabgabe gegenüber den in Fig. 3 dargestellten Testergebnissen erreicht werden kann, bei denen lediglich ein feststehender Formkörper aus Stahl verwendet wurde, der nicht beheizt war.

## Patentansprüche

1. Verfahren zum Herstellen von Glasfläschchen, insbesondere von Pharmafläschchen- und Pharmaampullen, aus einem Glasrohr (**10**) mit den folgenden Schritten:
(a) Rotieren des Glasrohrs (**10**) um seine Längsachse (**12**);
(b) Lokales Aufheizen des Glasrohrs (**10**) mittels mindestens eines Brenners (**14**) von mindestens einer Seite bis mindestens auf die Erweichungstemperatur (Ew) des Glases;
(c) Durchmesserreduzierung durch seitliches Andrücken mindestens eines Formteils (**28**) auf den erhitzten Bereich (**16**) und
(d) Trennen des Glasrohrs (**10**) mittels eines Brenners (1**4**) in dem in seinem Durchmesser reduzierten, erhitzen Bereich (**16**) unter Erhalt eines oberen und eines unteren Rohrabschnittes mit jeweils verschlossenem Boden.

2. Verfahren nach Anspruch 1, bei dem nach dem Schritt (b) zusätzlich ein Schritt (b1) durchgeführt wird, bei dem ein Auseinanderziehen des rotierenden Glasrohrs (**10**) in Axialrichtung zur Erzeugung eines Einschnürbereiches (**16**) erfolgt.

3. Verfahren nach Anspruch 1, bei dem die Schritte (a) bis (d) und ggf. (b1) bei rotierendem Glasrohr (**10**) in der angegebenen Reihenfolge durchgeführt werden.

4. Verfahren nach Anspruch 1, 2 oder 3, bei dem der nach dem Trennschritt (d) verbleibende obere Rohrabschnitt (**10'''**) an seinem geschlossenen Ende (**21**) mittels eines Brenners (**20**) aufgestochen wird.

5. Verfahren nach einem der vorhergehenden Ansprüche, bei dem das rotierende Glasrohr (**10**) nach dem Schritt (a) zunächst an einem Ende erhitzt und geformt wird, um einen Halsbereich (**23**) des zu formenden Fläschchens (**18**) zu bilden, und anschließend in einem vorbestimmten Abstand vom Ende gemäß Schritt (b) erhitzt wird.

6. Verfahren nach einem der vorhergehenden Ansprüche, bei dem das Glasrohr (**10**) mit einer Drehzahl von 200 min⁻¹ bis 500 min⁻¹, bevorzugt von 250 min⁻¹ bis 450 min⁻¹, weiter bevorzugt mit 300 min⁻¹ bis 400 min⁻¹ angetrieben wird.

7. Verfahren nach einem der vorhergehenden Ansprüche, bei dem der Formkörper (**28, 28a**) aus einer Wolframlegierung, aus Elektrographit oder aus warmfestem Stahl besteht.

8. Verfahren nach einem der vorhergehenden Ansprüche, bei der Formkörper (**28, 28a**) rotierend angetrieben wird.

9. Verfahren nach einem der vorhergehenden Ansprüche, bei dem der Formkörper (**28, 28a**) beheizt wird.

10. Verfahren nach einem der vorhergehenden Ansprüche, bei dem sich der Formkörper (**28, 28a**) in Richtung zum Glasrohr (**10**) verjüngt, vorzugsweise spitz zulaufend ausgebildet ist.

11. Verfahren nach einem der vorhergehenden Ansprüche, bei dem von beiden Seiten her ein Formkörper (**28**) zugestellt wird.

12. Verfahren nach einem der vorhergehenden Ansprüche, bei dem ein Glasrohr (**10**) aus einem Neutralglas in Form eines Borosilikatglas zur Herstellung der Glasfläschchen (**18**) verwendet wird.

## Claims

1. A method of producing glass vials from a glass tube (**10**), in particular pharmaceutical vials and pharmaceutical ampoules, comprising the following steps:
(a) rotating the glass tube (**10**) about its longitudinal axis (**12**);
(b) local heating of the glass tube (**10**) by means of a burner (**14**) from at least one side at least up to the softening temperature (E_{w}) of the glass;
(c) reducing the diameter by pressing at least one forming body (**28**) laterally against the heated region (**16**) and
(d) separating the glass tube (**10**) by means of the burner (**14**) in the heated area (**16**) in which the diameter has been reduced, thereby obtaining an upper and a lower tube section each having a closed bottom.

2. The method of claim 1, wherein after the step (b) an additional step (b1) is performed, wherein an extending of the rotating glass tube (**10**) in axial direction is performed for generating a constriction region (**16**).

3. The method of claim 1, wherein the steps (a) to (d) and possibly (b1) are performed in the given sequence while the glass tube (**10**) is rotating.

4. The method of any of claims 1, 2 or 3, wherein the remaining closed upper tube section (**10"'**) after the separating step (d) is pierced at its closed end (**21**) by means of a burner (**20**).

5. The method of any of the preceding claims, wherein the rotating glass tube (**10**) after the step (a) is initially heated at one end and formed for generating a neck region (**23**) of the vial (**18**) to be formed, and subsequently is heated in a predetermined distance from the end according to the step (b).

6. The method of any of the preceding claims, wherein the glass tube (**10**) is driven at a rotating speed of 200 min⁻¹ to 500 min⁻¹, preferably 250 min⁻¹ to 450 min⁻¹ and more preferably 300 min⁻¹ to 400 min⁻¹.

7. The method of any of the preceding claims, wherein the forming body (**28, 28a**) consists of a tungsten alloy, of electro-graphite or of a heat-resistant steel.

8. The method of any of the preceding claims, wherein the forming body (**28, 28a**) is driven rotatingly.

9. The method of any of the preceding claims, wherein the forming body (**28, 28a**) is heated.

10. The method of any of the preceding claims, wherein the forming body (**28, 28a**) tapers towards the glass tube (**10**), preferably is configured running pointed.

11. The method of any of the preceding claims, wherein the forming body (**28**) is advanced on both sides.

12. The method of any of the preceding claims, wherein a glass tube (**10**) of a neutral glass configured as a borosilicate glass is utilized for preparing the glass vial (**18**).

## Revendications

1. Procédé de fabrication de flacons en verre à partir d'un tube en verre (**10**), en particulier de flacons pharmaceutiques et d'ampoules pharmaceutiques, comprenant les étapes suivantes :
(a) faire tourner le tube de verre (**10**) autour de son axe longitudinal (**12**) ;
(b) chauffage local du tube de verre (10) au moyen d'un brûleur (14) d'au moins un côté au moins jusqu'à la température de ramollissement (E_{w}) du verre ;
(c) réduire le diamètre en pressant latéralement au moins un corps de formage (**28**) contre la région chauffée (**16**) et
(d) séparation du tube de verre (**10**) au moyen du brûleur (**14**) dans la zone chauffée (**16**) dans laquelle le diamètre a été réduit, obtenant ainsi une section supérieure et une section inférieure de tube ayant chacune un fond fermé.

2. Procédé selon la revendication 1, dans lequel, après l'étape (b), une étape supplémentaire (b1) est réalisée, dans lequel une extension du tube de verre rotatif (**10**) dans la direction axiale est réalisée pour générer une région de constriction (**16**).

3. Procédé selon la revendication 1, dans lequel les étapes (a) à (d) et éventuellement (b1) sont exécutées dans l'ordre donné pendant que le tube en verre (**10**) tourne.

4. Procédé selon l'une quelconque des revendications 1, 2 ou 3, dans lequel le tronçon de tube supérieur fermé restant (**10""**) après l'étape de séparation (d) est percé à son extrémité fermée (**21**) au moyen d'un br leur (**20**).

5. Procédé de l'une quelconque des revendications précédentes, dans lequel le tube de verre rotatif (**10**) après l'étape (a) est initialement chauffé à une extrémité et formé pour générer une région de col (**23**) du flacon (**18**) à former, et est ensuite chauffé à une distance prédéterminée de l'extrémité selon l'étape (b).

6. Procédé de l'une quelconque des revendications précédentes, dans lequel le tube de verre (**10**) est entraîné à une vitesse de rotation de 200 min-1 à 500 min-1, de préférence de 250 min-1 à 450 min-1 et plus particulièrement de 300 min-1 à 400 min-1.

7. Procédé de l'une quelconque des revendications précédentes, dans lequel le corps de formage (**28, 28a**) est constitué d'un alliage de tungstène, d'électrographite ou d'un acier résistant à la chaleur.

8. Procédé de l'une quelconque des revendications précédentes, dans lequel le corps de formage (**28, 28a**) est entraîné en rotation.

9. Procédé de l'une quelconque des revendications précédentes, dans lequel le corps de formage (**28, 28a**) est chauffé.

10. Procédé de l'une quelconque des revendications précédentes, dans lequel le corps de formage (**28, 28a**) se rétrécit vers le tube de verre (**10**), de préférence est configuré en étant pointu.

11. Procédé de l'une quelconque des revendications précédentes, dans lequel le corps de formage (**28**) est avancé des deux côtés.

12. Procédé de l'une quelconque des revendications précédentes, dans lequel un tube de verre (**10**) d'un verre neutre configuré comme un verre borosilicaté est utilisé pour préparer le flacon de verre (**18**).
